# EUROPÄISCHE PATENTSCHRIFT

(11) **EP 1 316 445 B1**
(45) Veröffentlichungstag und Bekanntmachung des Hinweises auf die Patenterteilung: **08.09.2004**
(21) Anmeldenummer: 01128520.2
(22) Anmeldetag: 29.11.2001
(51) Int. Cl.: B60D 1/06, B60D 1/60

(54) **Mit einer Schliesseinrichtung versehene Kugelkopfkupplung**
Ball hitch assembly with locking device
Rotule d'attelage avec dispositif de verrouillage

(43) Veröffentlichungstag der Anmeldung: 04.06.2003
(73) Patentinhaber: Albe Berndes GmbH, 32312 Lübbecke (DE)
(72) Erfinder: Berndes, Karl Josef, 32312 Lübbecke (DE)
(74) Vertreter: Dantz, Jan Henning

(56) Entgegenhaltungen:
- EP-A- 0 611 670
- DE-C- 3 731 264
- DE-U- 20 103 654
- FR-A- 2 697 471

## Beschreibung

Die vorliegende Erfindung betrifft eine mit einer Schließeinrichtung versehene Kugelkopfkupplung gemäß dem an sich bekannten Oberbegriff des Anspruchs 1.

Um den Diebstahl eines Anhängers zu verhindern, ist es bekannt, mittels Schließeinrichtungen entweder den Handgriff zu blockieren, so daß dieser nicht mehr zum Öffnen der Kugelpfanne betätigt werden kann oder die Kugelpfanne direkt so festzusetzen, daß eine Verschwenkung in Offenstellung unmöglich ist.

In beiden Fällen bleibt die Kugelpfanne geschlossen, so daß die Kugelkopfkupplung entweder nicht von einer eingerasteten Kugel, die üblicherweise an einem Zugfahrzeug befestigt ist, abgenommen oder auf eine Kugel aufsetzbar ist. In jedem Fall wird verhindert, daß der Anhänger an ein anderes Zugfahrzeug angekuppelt werden kann.

Hierzu sind verschiedene Schließeinrichtungen bekannt, die jedoch allesamt den Nachteil haben, daß zumindest das Schloß, vielfach aber auch der Verriegelungsbolzen, bei Nichtgebrauch als separates Teil geführt werden muß. Eine weitere Kugelkopfkupplung ist z.B. aus der DE-U-201 03 654 bekannt.

Dabei besteht naturgemäß die Gefahr, daß diese losen Teile verloren gehen, was die Verwendung der Schließeinrichtung insgesamt dauerhaft nicht sichert.

Der vorliegenden Erfindung liegt daher die Aufgabe zugrunde, eine Kugelkopfkupplung der gattungsgemäßen Art so auszubilden, daß ihre Handhabung und Verwendungsfähigkeit verbessert und sicherer wird.

Diese Aufgabe wird durch eine Kugelkopfkupplung gelöst, die die Merkmale des Anspruchs 1 aufweist.

Durch diese Ausbildung der Kugelkopfkupplung können sowohl der Verriegelungsbolzen wie auch das Schloß ständig an der Kugelkopfkupplung verbleiben, d. h., sowohl während des Betriebs, in der der Verriegelungsbolzen außer Eingriff sein muß, um eine freie Verschwenkung der Kugelpfanne zu ermöglichen, als auch in verriegelter Stellung zur Diebstahlsicherung.

Der Verriegelungsbolzen, der in etwa in Längsachsebene des Kupplungsgehäuses in dem Aufnahmeteil geführt ist, kann in Sicherungsstellung einen Anschlagbolzen axial blockieren, der quer durch das Kupplungsgehäuse geführt ist und dabei so nah an der geschlossenen Kugelpfanne verläuft, daß deren Verschwenkung ausgeschlossen ist. Die dem Verriegelungsbolzen zugewandte Seite des Anschlagbolzens weist einen Kopf auf, mit dem dieser am Kupplungsgehäuse anliegt, so daß der Anschlagbolzen in der zum Verriegelungsbolzen entgegengesetzten Richtung fixiert ist.

Zum Lösen der Blockierung ist ein Schloß, das in das Aufnahmeteil eingreift und dabei den Verriegelungsbolzen in axialer Richtung sichert, zu öffnen, so daß diese Sicherung aufgehoben wird und der Verriegelungsbolzen außerhalb des Überdekkungsbereiches mit dem Anschlagbolzen gezogen und dieser aus dem Kupplungsgehäuse entnommen werden kann.

Durch Zurückbringen des Verriegelungsbolzens in die Ausgangsposition kann das Schloß wieder mit dem Verriegelungsbolzen in Eingriff gebracht und verschlossen werden, so daß sowohl der Verriegelungsbolzen als auch das Schloß in dieser Nichtgebrauchsstellung unverlierbar am Kupplungsgehäuse gehalten sind.

Anstelle der direkten Blockierung durch einen Anschlagbolzen kann auch eine indirekte Blockierung der Kugelpfanne vorgesehen sein, bei der dann der Verriegelungsbolzen oder ein daran angeformtes Teil in ein im Kupplungsgehäuse vorgesehenes, sich in axialer Richtung erstreckendes Langloch eingreift, in dem ein Arretierungsbolzen des Handgriffs zur Betätigung der Kugelpfanne so festsetzbar ist, daß eine Bewegung des Handgriffs zum Öffnen der Kugelpfanne nicht möglich ist.

In diesem Fall wird der Verriegelungsbolzen in Eingriffsstellung in das Langloch ebenso gegen Verdrehen gesichert wie in einer Außereingriffstellung, in die er durch Drehung gebracht ist.

Das Schloß, beispielsweise ein in das Aufnahmeteil seitlich eingesteckter Schließzylinder bleibt ebenfalls ständig darin plaziert, wobei es axial festgesetzt gegen Herausfallen gesichert ist.

Neben der Verdrehsicherung des Verriegelungsbolzens ist auch eine axiale Sicherung durch das Schloß gegeben.

Nach einer weiteren vorteilhaften Ausbildung der Erfindung überragt der Verriegelungsbolzen sowohl in Verriegelungs- wie auch in Nichtverriegelungsstellung den Kopf einer Schraube, die quer durch die Deichsel geführt ist und mit der das Kupplungsgehäuse an der Deichsel befestigt ist.

Selbst bei Lösen der gegenüber liegenden Mutter ist die Schraube nicht herausziehbar, so daß ein Entwenden des Anhängers alleine durch Abschrauben der Kugelkopfkupplung ausgeschlossen ist.

Das Aufnahmeteil kann einstückig mit dem Kupplungsgehäuse verbunden sein, was sich insbesondere dann anbietet, wenn das Kupplungsgehäuse als Gußteil ausgebildet ist.

Denkbar ist aber auch, das Aufnahmeteil als separates Teil herzustellen und mit dem Kupplungsgehäuse so zu verbinden, daß eine unbefugte Abnahme ausgeschlossen ist.

Hierzu kann das Aufnahmeteil zweiteilig ausgebildet sein, wozu das den Verriegelungsbolzen beherbergende Gehäuse mit einem das Kupplungsgehäuse untergreifenden, an der anderen Seite formschlüssig anliegenden Anschlußbügel verschraubt ist und der Schraubenkopf von dem einliegenden Schloß verdeckt wird.

Diese Ausführungsform bietet sich vor allem dann an, wenn das Kupplungsgehäuse aus Stahlblech gefertigt ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: ein Ausführungsbeispiel der erfindungsgemäßen Kugelkopfkupplung in diebstahlgesicherter Stellung in einer Seitenansicht,
- Figur 2: die Kugelkopfkupplung in einer Draufsicht,
- Figur 3: eine teilweise geschnittene Seitenansicht nach Figur 1,
- Figur 4: eine teilweise geschnittene Vorderansicht der Kugelkopfkupplung,
- Figur 5: die Kugelkopfkupplung in einer entsicherten Stellung in einer Seitenansicht,
- Figur 6: ein weiteres Ausführungsbeispiel einer Kugelkopfkupplung in einer teilweise geschnnittenen Vorderansicht,
- Figur 7: ein weiteres Ausführungsbeispiel einer erfindungsgemäßen Kugelkopfkupplung in Sicherungsstellung in einer teilweise geschnittenen Seitenansicht,
- Figur 8: die Kugelkopfkupplung nach Figur 7 in einer entsicherten Stellung in einer Seitenansicht,
- Figur 9: eine Vorderansicht der Kugelkopfkupplung nach der Figur 7.

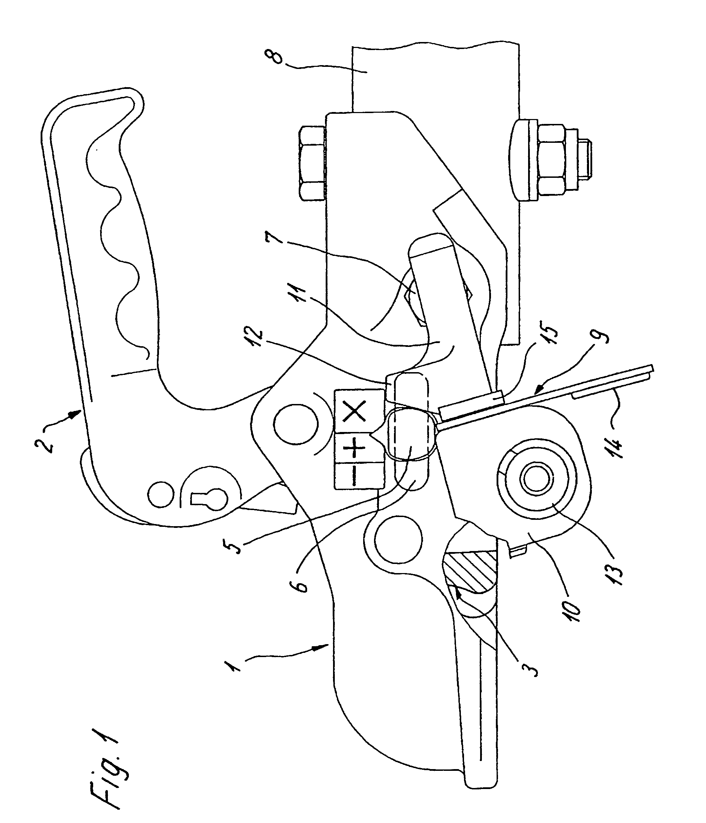

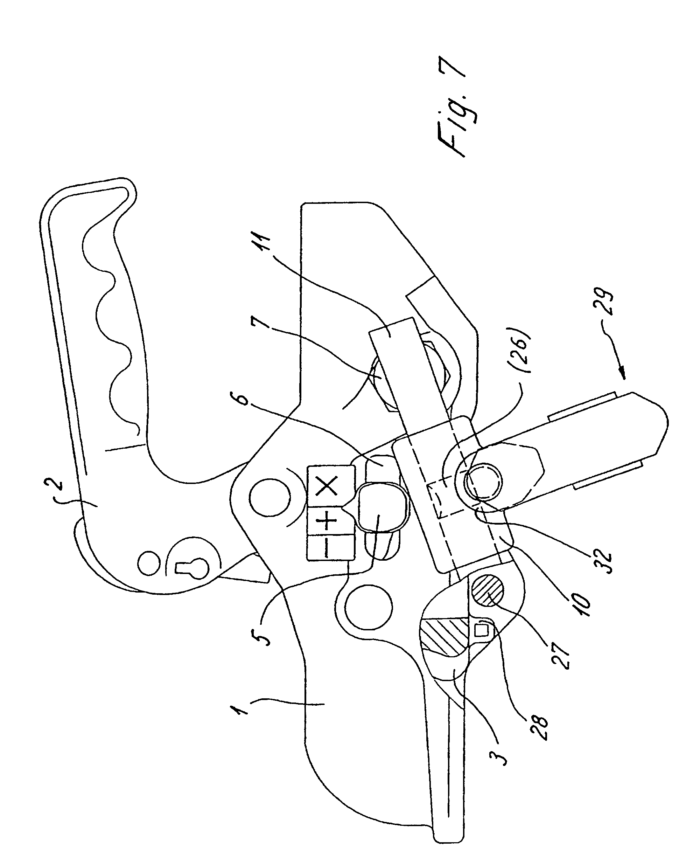

In den Figuren ist eine an der Deichsel 8 eines nicht gezeigten Anhängers befestigte Kugelkopfkupplung dargestellt, die in ihrem Grundaufbau aus einem Kupplungsgehäuse 1, einer schwenkbar darin gelagerten Kugelpfanne 3 (Figuren 1 und 7), einem die Arretierung der Kugelpfanne 3 beeinflussenden, in das Kupplungsgehäuse 1 hineinragenden Handgriff 2, dessen Griffteil unter der Wirkung einer Feder in Richtung des Kupplungsgehäuses gedrückt wird, und einer Schließeinrichtung 9, die einen Verriegelungsbolzen 11 sowie ein Schloß 13, 29 aufweist besteht. Mit dieser Schließeinrichtung 9 ist die Verschwenkung der Kugelpfanne 3 direkt oder indirekt blockierbar.

Die Schließeinrichtung 9 ist in einem seitlich am Kupplungsgehäuse 1 angeschlossenen Aufnahmeteil 10 angeordnet.

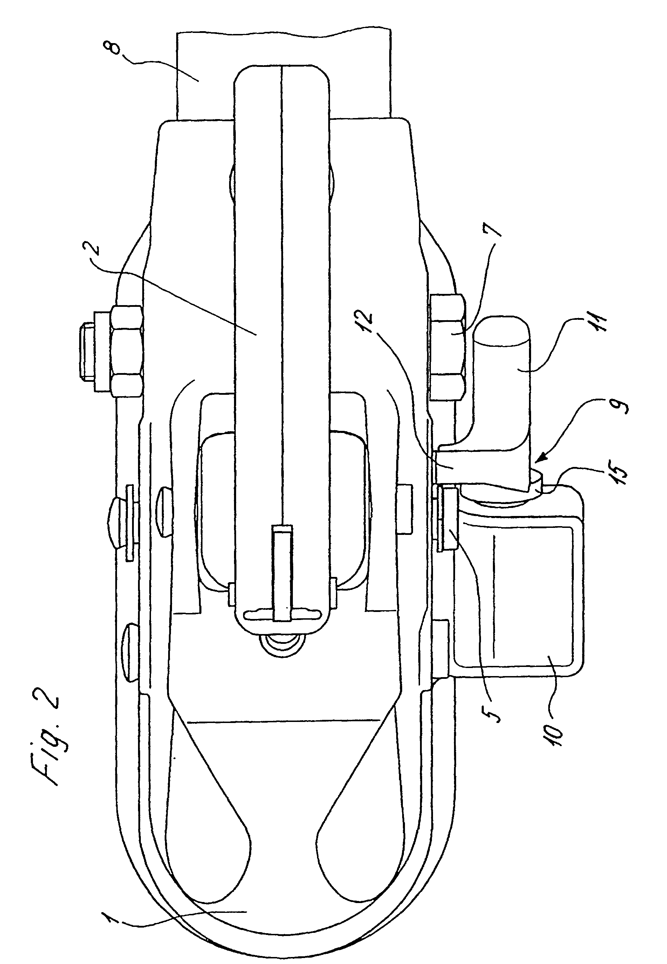

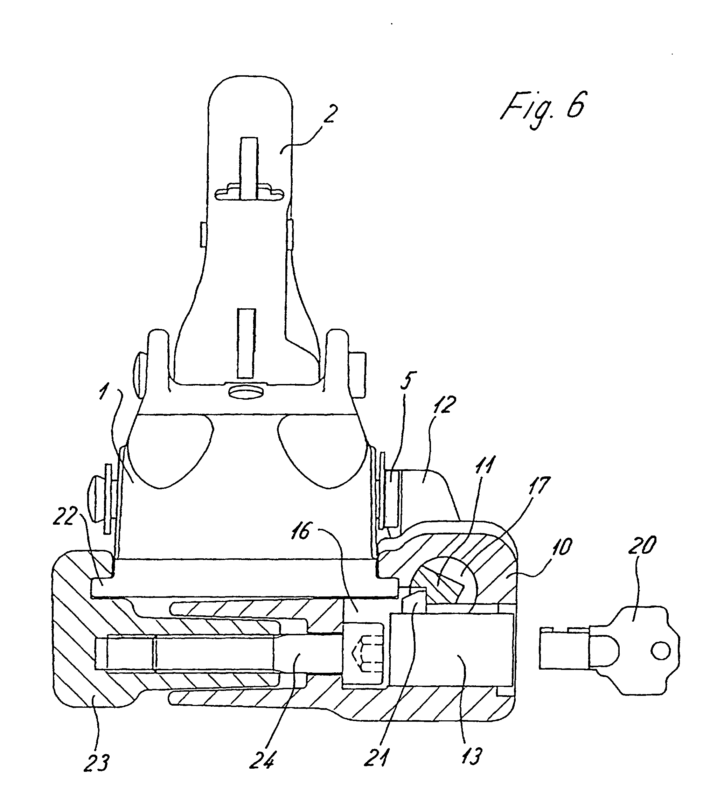

Bei den in den Figuren 1 bis 5 bzw. in der Figur 6 gezeigten Ausführungsbeispielen weist der Verriegelungsbolzen 11 eine Nase 12 auf, die in Sicherungsstellung (Figuren 1 bis 4)in ein Langloch 6 eingreift, das an der Seitenwandung des Kupplungsgehäuses 1 sich axial erstreckend vorgesehen ist und in dem ein Arretierungsbolzen 5 gelagert ist, mit dem die federbelastete Kugelpfanne ver- bzw. entriegelbar ist, wobei die Betätigung des Arretierungsbolzens 5 über den Handgriff 2 erfolgt.

Durch Blockierung des Arretierungsbolzens 5 mittels der Nase 12 wird indirekt die Kugelpfanne blockiert, so daß diese nicht geöffnet werden kann.

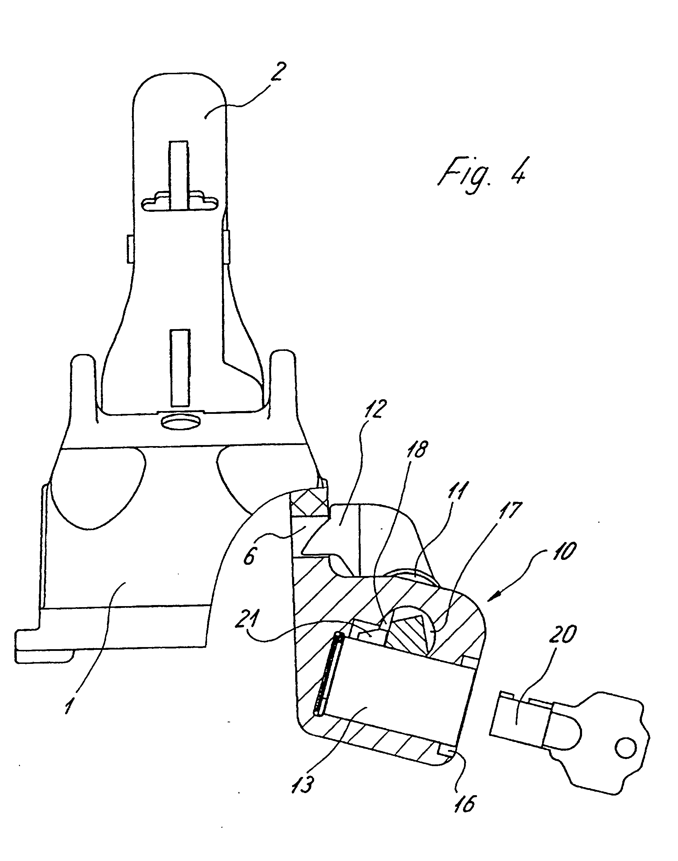

Dabei wird der Verriegelungsbolzen 11 über ein Zylinderschloß 13 bzw. dessen Sperre 21 (Figur 4) in dieser Eingriffsposition gehalten.

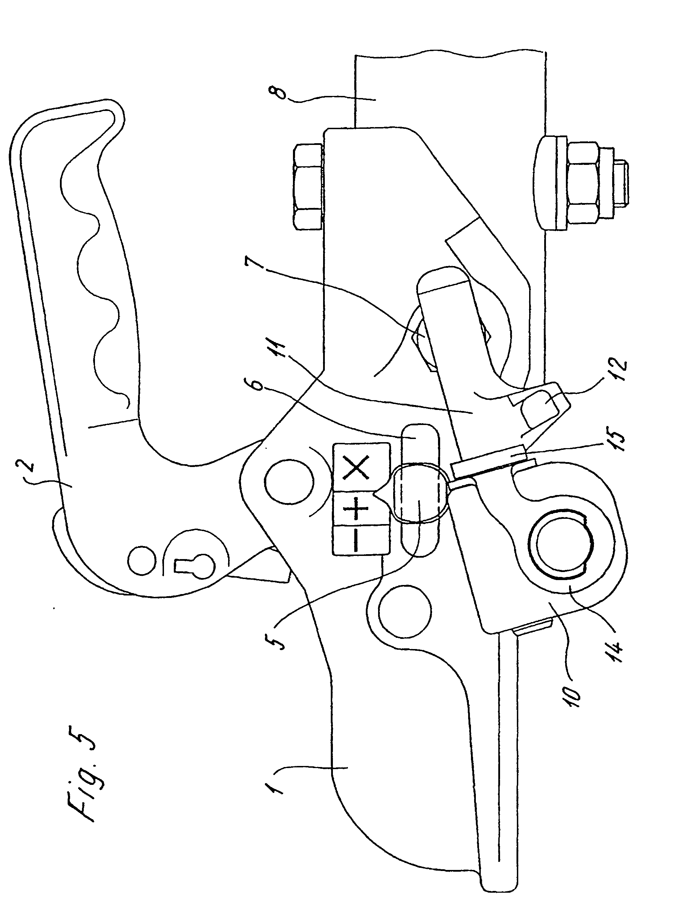

Um den Verriegelungsbolzen 11 in eine entriegelte Stellung zu drehen, in der der Arretierungsbolzen 5 in dem Langloch 6 frei beweglich ist, ist das Schloß 13 aus einer Schloßbohrung 16 heraus zu ziehen, so daß der Verriegelungsbolzen 11 vorzugsweise um 180° drehbar ist und die Nase 12 außer Eingriff gebracht wird. Diese Position ist in der Figur 5 dargestellt.

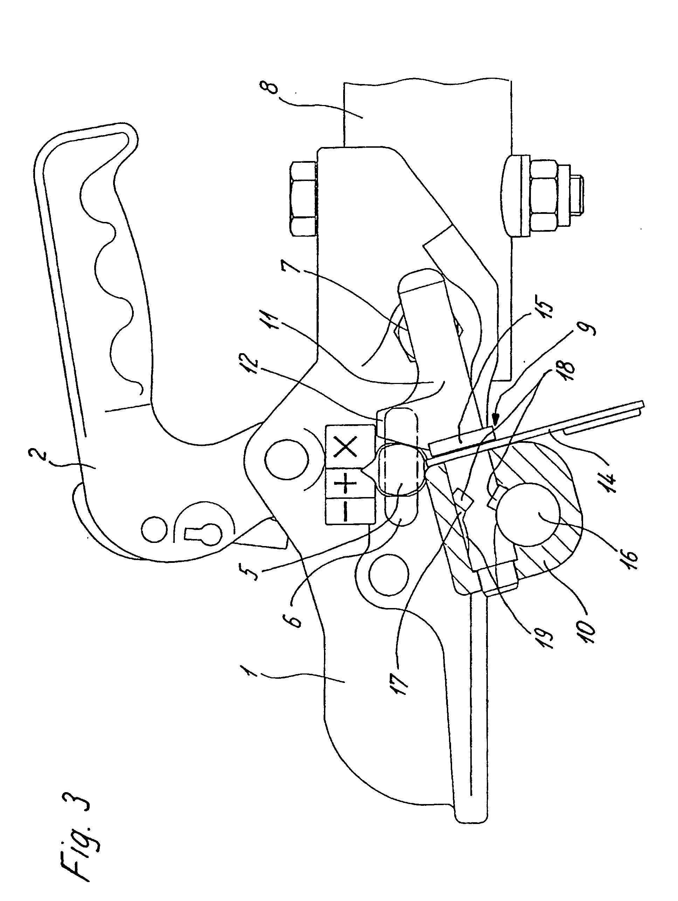

Wie insbesondere in den Figuren 3 und 4 erkennbar ist, hintergreift die Sperre 21 in jeder der genannten Stellungen des Verriegelungsbolzens, also sowohl in der Eingriffs- wie auch in der Nichteingriffsposition, eine Aussparung 18, deren begrenzende Flächen eine Anlage für die Sperre 21 bildet, so daß der Verriegelungsbolzen 11 weder drehbar noch axial aus einer Bohrung 17 des Aufnahmeteiles 10 herausziehbar ist, so daß in jeder Position der Verriegelungsbolzen 11 und auch das Schloß 13 unverlierbar gehalten sind.

Eine Verdrehsicherung des Verriegelungsbolzens 11 erfolgt überdies durch eine der Krümmung des Zylinderschlosses 13 angepaßte Vertiefung 19, in der der Zylinder des Schlosses 13 in beiden möglichen Stellungen des Verriegelungsbolzens 11 einliegt.

Der Verriegelungsbolzen 11 ragt in Richtung der Deichsel 8 so weit aus dem Aufnahmeteil 10 heraus, daß er einen Schraubenkopf 7 einer Schraube überdeckt, mit der die Kugelkopfkupplung an der Deichsel 8 befestigt ist. Ein Lösen dieser Schraube ist daher in jedem Fall unmöglich.

Zwischen dem Aufnahmeteil 10 und einem Bündchen 15 des Verriegelungsbolzens 11 ist auf diesem mit einer Lasche eine Abdeckkappe 14 geführt, mit der das Schloß 13 bei abgezogenem Schlüssel 20 abdeckbar ist, so daß dies vor Verschmutzungen geschützt ist. Diese Abdeckkappe 14 besteht zweckmäßigerweise aus Kunststoff.

Während bei den Ausführungsbeispielen gemäß der Figuren 1 bis 5 bzw. der Figuren 7 bis 9 das Aufnahmeteil 10 unlösbar durch Anformen oder Anschweißen mit dem Kupplungsgehäuse 1 verbunden ist, ist das Aufnahmeteil 10 bei dem in der Figur 6 gezeigten Ausführungsform mittels eines Anschlußbügels 23 am Kupplungsgehäuse 1 befestigt.

Dieser Anschlußbügel 23 umgreift ebenso wie das Aufnahmeteil 10 einen Kragen 22 des Kupplungsgehäuses 1, mit dem viele schon im Einsatz befindliche Kugelkopfkupplungen versehen sind, so daß auch nachträglich das Aufnahmeteil 10 montiert werden kann.

Dabei erstreckt sich das Aufnahmeteil 10 teilweise unterhalb des Kupplungsgehäuses und korrespondiert dort mit einem Teil des Anschlußbügels 23 und ist mit diesem über eine Schraube 24 verbunden, die von der Anschlußteilseite her eingesteckt und mit dem Anschlußbügel 23 verschraubt ist.

In montierter Position wird der Kopf der Schraube 24 von dem Schloß 13 abgedeckt, wobei dies ebenso wie der Kopf der Schraube 24 in der Schloßbohrung 16 einliegt.

Da das Schloß 13 sowohl in gesicherter als auch in entsicherter Stellung in dem Aufnahmeteil 10 verbleibt, ist die Schraube 24 vor einem unbefugten Zugriff gesichert.

In den Figuren 7 bis 9 ist eine Kugelkopfkupplung dargestellt, bei der der Verriegelungsbolzen 11 im wesentlichen zylindrisch ausgebildet ist und in Verriegelungsstellung einen Anschlagbolzen 27 gegen axiales Verschieben blockiert, der unterhalb des Kupplungsgehäuses 1 verläuft und in Seitenwandungen gelagert ist. Dabei bildet dieser Anschlagbolzen 27 einen Anschlag für die Kugelpfanne 3 im Falle die Arretierung wird über den Arretierungsbolzen 5 gelöst, der hierbei nicht blockierbar ist. Hierzu sind an der Unterseite der Kugelpfanne 3 Zapfen 28 angeordnet, die sich bei dem Versuch, die Kugelpfanne 3 aufzuschwenken, an dem Anschlagbolzen 27 anlegen und den Verschwenkweg so begrenzen, daß eine Öffnung der Kugelpfanne 3 ausgeschlossen ist.

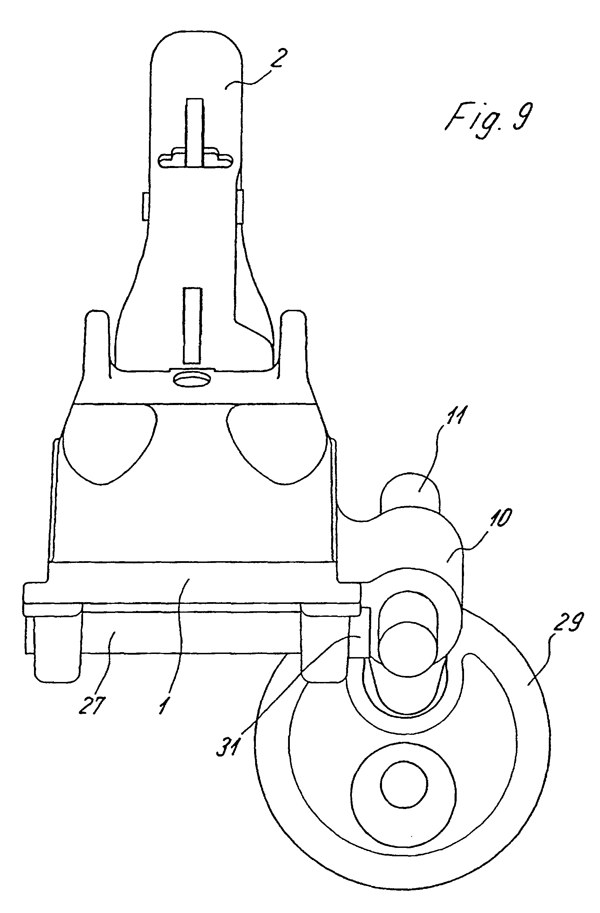

Wie insbesondere in der Figur 9 zu erkennen ist, ist die dem Arretierungsbolzen 11 zugewandte Seite des Anschlagbolzens 27 mit einem Ansatz 31 versehen, der außenseitig an der Wandung des Kupplungsgehäuses 1 anliegt, so daß der Anschlagbolzen 27 in axialer Richtung beidseitig arretiert ist.

Zur Festsetzung des Arretierbolzens 11 weist dieser eine umlaufende Einschnürung 26 auf, in der ein Schließbolzen eines als Vorhängeschloß ausgebildeten Schlosses 29 einliegt, der im weiteren durch ein Auge 32 des Anschlußteiles 10 geführt ist. Der Verriegelungsbolzen 11 ist dadurch gegen eine axiale Verschiebung gesichert. Im übrigen ist dieser ebenso wie der in den anderen Ausführungsbeispielen gezeigte und beschriebene Arretierungsbolzen 11 so dimensioniert, daß er in Sicherungsstellung über den Schraubenkopf 7 hinausragt.

Zur Entsicherung wird das Schloß geöffnet, bis der Schließbolzen außerhalb der Einschnürung 26 liegt und der Verriegelungsbolzen 11 aus dieser Stellung herausgezogen werden kann, so daß ein freier Zugriff auf den Anschlagbolzen 27 besteht, der dann entnehmbar ist.

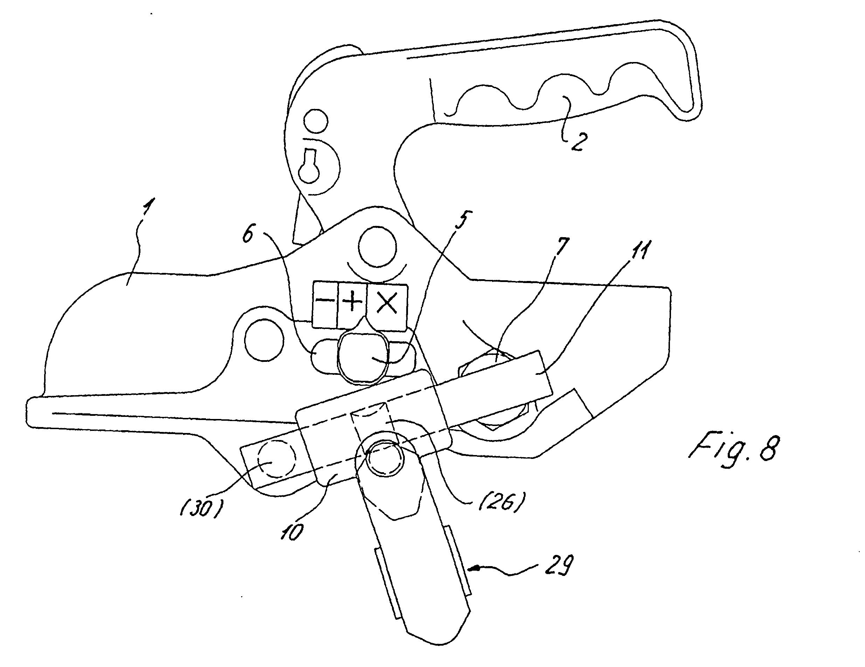

Diese Position ist in der Figur 8 dargestellt, wobei zu erkennen ist, daß die Durchstecköffnungen 30 für den Anschlagbolzen 27 frei sind.

Der Verriegelungsbolzen 11 kann in diesem Fall wieder in seine ursprüngliche Position zurückgeschoben werden, so daß das Schloß 29 im vorbeschriebenen Sinn einführbar ist und über den Schließbolzen, der in der Einschnürung 27 liegt, den Arretierbolzen 11 gegen Verschieben sichert. Dabei ist dieser ebenso wie das Schloß 29 unverlierbar gehalten.

## Patentansprüche

1. Mit einer Schließeinrichtung versehene Kugelkopfkupplung, mit einem Kupplungsgehäuse (1), einer schwenkbar darin gelagerten Kugelpfanne (3) und einem die Arretierung der Kugelpfanne (3) beeinflussenden, in das Kupplungsgehäuse (1) hineinragenden Handgriff (2), dessen Griffteil unter der Wirkung einer Feder in Richtung des Kupplungsgehäuses (1) gedrückt wird, wobei die Schließeinrichtung (9), mit der die Verschwenkung der Kugelpfanne (3) direkt oder indirekt blockierbar ist, einen Verriegelungsbolzen (11) sowie ein Schloß (13, 29) aufweist, **dadurch gekennzeichnet, daß** seitlich am Kupplungsgehäuse (1) ein Aufnahmeteil (10) angeschlossen ist, in dem der darin geführte Verriegelungsbolzen (11) und das Schloß (13, 29) in Gebrauchsund Nichtgebrauchsstellung unverlierbar gehalten sind.

2. Kugelkopfkupplung nach Anspruch 1, **dadurch gekennzeichnet, daß** der Verriegelungsbolzen (11) im wesentlichen achsparallel zur Längsachse des Kupplungsgehäuses (1) verläuft.

3. Kugelkopfkupplung nach Anspruch 1, bei dem mittels des Handgriffs (2) ein Arretierungsbolzen (5) betätigbar ist, der in sich in Längsachsrichtung des Kupplungsgehäuses (1) erstreckenden, in dessen Wandungen vorgesehenen Langlöchern geführt ist und mit dem die Arretierung der Kugelpfanne (3) beeinflußbar ist, **dadurch gekennzeichnet, daß** der Verriegelungsbolzen (11) eine Nase (12) aufweist, die in Sicherungsstellung in das zugeordnete Langloch (6) eingreift und die zur Öffnung der Kugelpfanne (3) notwendige Verschiebung des Arretierungsbolzens (5) blockiert.

4. Kugelkopfkupplung nach Anspruch 3, **dadurch gekennzeichnet, daß** das Schloß (13) in den Verriegelungsbolzen (11) so eingreift, daß dieser verdrehund verschiebegesichert ist.

5. Kugelkopfkupplung nach Anspruch 4, **dadurch gekennzeichnet, daß** der Verriegelungsbolzen (11) Aussparungen (18) aufweist, an denen eine Sperre (21) des Schlosses (13) sowohl bei Eingriff der Nase (12) in das Langloch (6) als auch in einer demgegenüber herausgedrehten Stellung den Verriegelungsbolzen (11) gegen Verdrehen und das Schloß (13) gegen axiales Verschieben sichernd anliegt.

6. Kugelkopfkupplung nach Anspruch 4, **dadurch gekennzeichnet, daß** der Verriegelungsbolzen (11) den Aussparungen (18) benachbart jeweils eine Vertiefung (19) aufweist, die in ihrer Kontur der Querschnittskontur eines Schließzylinders des Schlosses (13) angepaßt ist.

7. Kugelkopfkupplung nach Anspruch 5 oder 6, **dadurch gekennzeichnet, daß** die Aussparungen (18) und die Vertiefungen (19) sich jeweils direkt gegenüber liegen.

8. Kugelkopfkupplung nach Anspruch 1, **dadurch gekennzeichnet, daß** der Verriegelungsbolzen (11) in seiner Länge so dimensioniert ist, daß er einen Schraubenkopf (7) einer Schraube überragt, mit der die Kugelkopfkupplung an der Deichsel (8) befestigt ist.

9. Kugelkopfkupplung nach Anspruch 3, **dadurch gekennzeichnet, daß** eine Andeckkappe (14) vorgesehen ist, mit der das Schloß (13) verschließbar ist.

10. Kugelkopfkupplung nach Anspruch 1, **dadurch gekennzeichnet, daß** das Aufnahmeteil (10) unlösbar mit dem Kupplungsgehäuse (1) durch Anformen oder Anschweißen ausgebildet ist.

11. Kugelkopfkupplung nach Anspruch 3, bei dem das Kupplungsgehäuse (1) zumindest an den beiden sich gegenüber liegenden Seiten einen Kragen (22) aufweist, **dadurch gekennzeichnet, daß** das Aufnahmeteil (10) einerseits auf dem Kragen (22) aufliegt und andererseits mit einem Anschlußbügel (23) verschraubt ist, der den Kragen (22) auf der gegenüber liegenden Seite umgreift.

12. Kugelkopfkupplung nach Anspruch 11, **dadurch gekennzeichnet, daß** in dem Anschlußteil (10) eine Schraube (24) mit ihrem Kopf einliegt, die in den Anschtußbügel (23) eingeschraubt ist.

13. Kugelkopfkupplung nach Anspruch 11, **dadurch gekennzeichnet, daß** der Schraubenkopf der Schraube (24) von dem Schloß (13) überdeckt ist.

14. Kugelkopfkupplung nach Anspruch 1, **dadurch gekennzeichnet, daß** der Kugelpfanne (3) in Schließstellung benachbart ein Anschlagbolzen (27) vorgesehen ist, der quer zur Längsachsrichtung des Kupplungsgehäuses (1) in den beiden Gehäusewandungen gelagert ist und dessen als Ansatz (31) ausgebildeter Kopf von dem Verriegelungsbolzen (11) überragt wird.

15. Kugelkopfkupplung nach Anspruch 14, **dadurch gekennzeichnet, daß** der Verriegelungsbolzen (11) eine umlaufende Einschnürung aufweist, in der ein Schließbolzen eines Vorhängeschlosses (29) einliegt, das in dem Aufnahmeteil (10) festgelegt ist.

16. Kugelkopfkupplung nach Anspruch 15, **dadurch gekennzeichnet, daß** das Aufnahmeteil (10) ein Auge (32) aufweist, durch das der Schließbolzen des Schlosses (29) geführt ist.

## Claims

1. Ball-headed coupling provided with a locking device, having a coupling housing (1), a ball socket (3) pivotably mounted therein and a handle (2) which influences the detention of the ball socket (3) and projects into the coupling housing (1) and a grip part of which is pressed in the direction of the coupling housing (1) under the action of a spring, the locking device (9), by means of which the pivoting of the ball socket (3) can be blocked directly or indirectly, having a latching bolt (11) and a lock (13, 29), **characterized in that** the coupling housing (1) has connected to it laterally a reception part (10), in which the latching bolt (11) guided therein and the lock (13, 29) are held captive in the position of use and of non-use.

2. Ball-headed coupling according to Claim 1, **characterized in that** the latching bolt (11) runs essentially axially parallel to the longitudinal axis of the coupling housing (1).

3. Ball-headed coupling according to Claim 1, in which, by means of the handle (2), a detaining bolt (5) can be actuated, which is guided in long holes extending in the longitudinal axial direction of the coupling housing (1) and provided in the walls of the latter and by means of which the detention of the ball socket (3) can be influenced, **characterized in that** the latching bolt (11) has a nose (12) which engages into the associated long holes (6) in the securing position and which blocks the displacement of the retaining bolt (5), the said displacement being necessary for opening the ball socket (3).

4. Ball-headed coupling according to Claim 3, **characterized in that** the lock (13) engages into the latching bolt (11) in such a way that the latter is secured against rotation and against displacement.

5. Ball-headed coupling according to Claim 4, **characterized in that** the latching bolt (11) has clearances (18), against which a stop (21) of the lock (13) comes to bear, both during the engagement of the nose (12) into the long hole (6) and in a position rotated outwards in relation to this, so as to secure the latching bolt (11) against rotation and the lock (13) against axial displacement.

6. Ball-headed coupling according to Claim 4, **characterized in that** the latching bolt (11) has, adjacent to each of the clearances (18), a depression (19) which is adapted in its contour to the cross-sectional contour of a locking cylinder of the lock (13).

7. Ball-headed coupling according to Claim 5 or 6, **characterized in that** the clearances (18) and the depressions (19) lie in each case directly opposite one another.

8. Ball-headed coupling according to Claim 1, **characterized in that** the latching bolt (11) is dimensioned in its length in such a way that this projects beyond a screw head (7) of a screw, by means of which the ball-headed coupling is fastened to the drawbar (8).

9. Ball-headed coupling according to Claim 3, **characterized in that** a cover cap (14), by means of which the lock (13) can be closed, is provided.

10. Ball-headed coupling according to Claim 1, **characterized in that** the reception part (10) is produced unreleasably together with the coupling housing (1) by integral forming or by welding.

11. Ball-headed coupling according to Claim 3, in which the coupling housing (1) has a collar (22) at least on each of the two sides located opposite one another, **characterized in that** the reception part (10), on the one hand, lies on the collar (22) and, on the other hand, is screwed to a connecting yoke (23) which surrounds the collar (22) on the opposite side.

12. Ball-headed coupling according to Claim 11, **characterized in that** a screw (24), which is screwed into the connecting yoke (23), is seated with its head in the reception part (10).

13. Ball-headed coupling according to Claim 11, **characterized in that** the screw head of the screw (24) is masked by the lock (13).

14. Ball-headed coupling according to Claim 1, **characterized in that**, in the locking position, the ball socket (3) has provided, adjacent to it, an abutment bolt (27) which is mounted transversely to the longitudinal axial direction of the coupling housing (1) in the two housing walls and to which the head, designed as a stud (31), has the latching bolt (11) projecting beyond it.

15. Ball-headed coupling according to Claim 14, **characterized in that** the latching bolt (11) has a peripheral contraction, in which is seated a locking bolt of a padlock (29) which is fixed in the reception part (10).

16. Ball-headed coupling according to Claim 15, **characterized in that** the reception part (10) has a lug (32), through which the locking bolt of the lock (29) is led.

## Revendications

1. Attelage à tête sphérique pourvu d'un dispositif de fermeture, comportant un boîtier d'attelage (1), un coussinet sphérique (3) monté pivotant à l'intérieur de celui-ci et une poignée (2) agissant sur le blocage du coussinet sphérique (3) et pénétrant à l'intérieur du boîtier d'attelage (1), dont la partie de prise est pressée, sous l'action d'un ressort, en direction du boîtier d'attelage (1), le dispositif de fermeture (9), au moyen duquel le pivotement du coussinet sphérique (3) peut être bloqué directement ou indirectement, comportant une cheville de verrouillage (11) ainsi qu'une serrure (13, 29), **caractérisé en ce qu'**au boîtier d'attelage (1) est raccordé latéralement un logement (10) dans lequel la cheville de verrouillage (11) guidée à l'intérieur et la serrure (13, 29) sont maintenues imperdables en position d'utilisation et en position de non-utilisation.

2. Attelage à tête sphérique selon la revendication 1, **caractérisé en ce que** la cheville de verrouillage (11) s'étend sensiblement avec son axe parallèle à l'axe longitudinal du boîtier d'attelage (1).

3. Attelage à tête sphérique selon la revendication 1, dans lequel au moyen de la poignée (2) on peut actionner un doigt de blocage (5) qui, s'étendant dans la direction de l'axe longitudinal du boîtier d'attelage (1), est guidé dans des trous oblongs prévus dans ses parois, et au moyen duquel on peut agir sur le blocage du coussinet sphérique (3), **caractérisé en ce que** la cheville de verrouillage (11) comporte un ergot (10) qui, en position de blocage, s'engage dans le trou oblong (6) correspondant et qui bloque le coulissement du doigt de blocage (5) nécessaire à l'ouverture du coussinet sphérique (3).

4. Attelage à tête sphérique selon la revendication 3, **caractérisé en ce que** la serrure (13) s'engage dans la cheville de verrouillage (11) de manière à ce que celle-ci soit bloquée en rotation et en coulissement.

5. Attelage à tête sphérique selon la revendication 4, **caractérisé en ce que** la cheville de verrouillage (11) présente des découpes (18) contre lesquelles s'applique un organe de blocage (21) de la serrure (13), aussi bien lorsque l'ergot (12) s'engage dans le trou oblong (6) que dans une position ressortie par rapport à celui-ci, en bloquant la cheville de verrouillage (11) contre une rotation et la serrure (13) contre un coulissement axial.

6. Attelage à tête sphérique selon la revendication 4, **caractérisé en ce que** la cheville de verrouillage (11) présente au voisinage de chacune des découpes (18) un renfoncement (19) dont le contour est adapté au contour de la section transversale d'un cylindre de fermeture de la serrure (13).

7. Attelage à tête sphérique selon la revendication 5 ou 6, **caractérisé en ce que** les découpes (18) et les renfoncements (19) se font face directement l'une l'autre.

8. Attelage à tête sphérique selon la revendication 1, **caractérisé en ce que** la cheville de verrouillage (11) a une longueur telle qu'elle dépasse d'une tête de vis (7) d'une vis au moyen de laquelle l'attelage à tête sphérique est fixé sur la barre d'attelage (8).

9. Attelage à tête sphérique selon la revendication 3, **caractérisé en ce qu'**il est prévu un capuchon de couverture (14) au moyen duquel la serrure (13) peut être fermée.

10. Attelage à tête sphérique selon la revendication 1, **caractérisé en ce que** le logement (10) est réalisé de manière à ne pouvoir être séparé du boîtier d'attelage (1), par moulage ou soudage d'une seule pièce.

11. Attelage à tête sphérique selon la revendication 3, dans lequel le boîtier d'attelage (1) comporte, au moins sur les deux côtés se faisant face, une collerette (22), **caractérisé en ce que** le logement (10) repose d'une part sur la collerette (22) et d'autre part est vissé à un étrier de raccordement (23) qui entoure la collerette (22) sur le côté opposé.

12. Attelage à tête sphérique selon la revendication 1, **caractérisé en ce que** dans l'élément de raccordement (10) se trouve la tête d'une vis (24) qui est vissée dans l'étrier de raccordement (23).

13. Attelage à tête sphérique selon la revendication 11, **caractérisé en ce que** la tête de la vis (24) est recouverte par la serrure (13).

14. Attelage à tête sphérique selon la revendication 1, **caractérisé en ce que** le coussinet sphérique (3) est prévu, en position de fermeture, au voisinage d'un doigt de butée (27) qui est monté transversalement à la direction de l'axe longitudinal du boîtier d'attelage (1), dans les deux parois du boîtier, et dont la tête, réalisée en tant qu'appendice (31), dépasse de la cheville de verrouillage (11).

15. Attelage à tête sphérique selon la revendication 14, **caractérisé en ce que** la cheville de verrouillage (11) présente un rétrécissement périphérique dans lequel se trouve une tige de fermeture d'un cadenas (29) qui est fixé dans le logement (10).

16. , Attelage à tête sphérique selon la revendication 15, **caractérisé en ce que** le logement (10) présente un oeillet (32) à travers lequel est guidée la tige de fermeture du cadenas (29).
